# EUROPEAN PATENT SPECIFICATION

(11) **EP 2 698 682 B1**
(45) Date of publication and mention of the grant of the patent: **21.03.2018**
(21) Application number: 12770585.3
(22) Date of filing: 10.04.2012
(51) Int. Cl.: G05G 9/00, B60T 7/04, B62B 9/08, G05G 1/30

(54) **LINKED OPERATION MECHANISM**
VERKNÜPFTER BETRIEBSMECHANISMUS
MÉCANISME DE FONCTIONNEMENT LIÉ

(30) Priority: 14.04.2011 JP 2011089957
(43) Date of publication of application: 19.02.2014
(73) Proprietor: Combi Corporation, Tokyo 111-0041 (JP)
(72) Inventor: KAJIMOTO, Youhei, Saitama-shi Saitama 336-0017 (JP)
(74) Representative: Viering, Jentschura & Partner mbB Patent- und Rechtsanwälte
(86) International application number: PCT/JP2012/059771
(87) International publication number: WO 2012/141168

(56) References cited:
- EP-A2- 1 484 229
- EP-A2- 1 591 340
- GB-A- 2 283 791
- JP-A- 2002 052 950
- JP-A- 2002 211 409
- JP-A- 2008 174 011
- JP-U- 64 047 437

## Description

### TECHNICAL FIELD

The present invention relates to a linking operation mechanism which operates a plurality of operation members so as to be linked with each other.

### BACKGROUND ART

As a mechanism for operating braking devices of right and left wheels provided to a baby stroller, already known is a linking operation mechanism that while an operation member for braking a rotation of each wheel is pushed by a spring toward a locking position, both of the operation members are connected to each other with a wire, and when one of the operation members is moved from the locking position to a lock releasing position against the spring, by transferring the movement to the other one of the operation members via the wire, the other one is also moved from the locking position to the lock releasing position. (For example, see the patent literature 1)

### CITATION LIST

### PATENT LITERATURE

Patent literature #1:JP-A-2005-14894

### SUMMARY OF THE INVENTION

### TECHNICAL PROBLEM

In the conventional linking operation mechanism, the wire is directly connected with each of a pair of operation members and thereby, the operation members are made to work with each other. Accordingly, in a case that an operation that the wire is pulled at the middle thereof is performed, an inconvenient matter could occur in such a way that only one of the operation members moves, in conjunction with the pulling operation, from a position where the operation member should be placed.

Then, the aim of the present invention is providing a linking operation mechanism which can prevent a false operation in a case that operations of a pair of operation members are linked with each other by a wire.

### SOLUTION TO PROBLEM

A linking operation mechanism of the present invention is a linking operation mechanism comprising: a first operation member provided to a first base portion so as to revolve around a first pivot point as a center between an operating position and a waiting position; a second operation member provided to a second base portion so as to revolve around a second pivot point as a center between an operating position and a waiting position; a wire arranged between the first operation member and the second operation member so that the first operation member and the second operation member work together between the operating position and the waiting position; a spring member giving tensile force to the wire so that both of the first operation member and the second operation member are driven toward either the operating position or the waiting position; and a wire joining member interposed between the first operation member and one end portion of the wire, fitted to the first operation member so as to transfer in a direction approaching to and separating from the first pivot point, and joined to the one end portion of the wire so as to transfer integrally relative to the first operation member, wherein the first base portion is provided with a leading portion having: concave portions contacting with the wire joining member by accepting the tensile force of the wire affecting the wire joining member, to which when the first operation member is situated at the operating position and the waiting position the wire joining member is engaged; and a convex portion located between the concave portions so as to be ridden over the convex portion more far away from the first pivot point than a position where the wire joining portion is engaged to the concave portions.

According to the present invention, the wire is connected with the first operation member via the wire joining member without being connected directly with the first operation member, and the wire joining member connects with the leading portion of the first base portion by tensile force of the wire. Therefore, when the first operation member is made to revolve around the first pivot point between the operating position and the waiting position, the wire joining member transfers along the leading portion of the first base portion while moving so as to approach to and separate from the first pivot point. When the first operation member is situated at the operating position and the waiting position, the wire joining beetle is engaged to the concave portion of the leading portion, and when the wire joining member transfers between the concave portions, on the way, the wire joining member transfers in a direction separating from the first pivot point, and rides over the convex portion. Accordingly, even if performed is an operation so as to pull out the wire in a state that the first operation member is situated at the operating position and the waiting position, the wire joining member is pushed to an inside of the concave portion. Therefore, there is no possibility that the wire joining member rides over the convex portion and transfers unintentionally to the concave portion of an opposite side. Thereby, it is possible to suppress misoperations of the operation member.

One embodiment of the present invention may be provided so that the first operation member is provided so as to revolve between the operating position and the waiting position by operation of a user, and a distance from the first pivot point to one of the concave portions and a distance from the first pivot point to the other one of the concave portions are different from each other. In a case that the first operation member is made to revolve between the operating position and the waiting position, some resistance is generated against the operation to the first operation member during a period after the wire joining member starts transferring from each concave portion until the wire joining member rides over the convex portion. The resistance varies depending on how long is a distance that the wire joining member should transfer far from the first pivot point. As the distance is longer, the resistance increases. Because of this, operation force to be required to a user also increases. Accordingly, it is possible to make a difference in an operation force of a user between the moment of operating the first operation member from the operating position to the waiting position and the moment of operating the first operation member in a reverse direction. Thereby, it is possible to differentiate the operation force of the user between the two moments and give a user a clue to recognizing which operation is being performed.

In the above embodiment, the first operation member and the second operation member may be provided so as to put a brake on a pair of operation objects when being situated at the operating position respectively, and release the brake of the pair of operation objects when being situated at the waiting position. In this case, when the first operation member is situated at the operating position the wire joining member may be engaged to the one of the concave portions, and when the first operation member is situated at the waiting position the wire joining member may be engaged to the other one of the concave portions, and the distance from the first pivot point to the one of the concave portions may be set so as to be longer than the distance from the first pivot point to the other one of the concave portions. Thereby, it is possible to increase the operation force of the moment of operating the first operation member so as to switch from a state of putting a brake on an operation object to a state of releasing the brake more than the operation force of the moment of operating the first operation member in a reverse direction. Therefore, it is possible to expect to prevent a brake releasing operation from being performed unintentionally by the user.

In the embodiment mentioned above, the spring member may be provided to drive the second operation member toward the operating position. Thereby, while the spring member functions as the resistance against an operation to the first operation member to change from the operating position to the waiting position, the spring member also functions so as to help an operation to the first operation member to change from the waiting position to the operating position. Accordingly, the operation force for the brake releasing operation increases further more than the operation force for the braking operation, and it is further enhanced to prevent the brake releasing operation from being performed unintentionally by the user.

Further, the one pair of operation objects may be one pair of right-left wheels of a hand barrow. Thereby, it is possible to produce the effects of the present invention to a mechanism where a situation of wheels of a hand barrow is switched between brake and releasing brake. As the first operation member, provided may be an operation pedal which allows a user a tread operation between the operating position and the waiting position. Thereby, it is possible to produce the effects of the present invention to brake and brake releasing operations of wheels by a tread operation by a user. Additionally, the first base portion and the second base portion may be provided at top end portions of the pair of right-left leg portions of the hand barrow respectively; a joining beetle may be arranged between the top end portions of the leg portions; the wire may be housed in a tube; and the tube may be passed inside the joining beetle. Thereby, there is no possibility that the wire is pulled at the middle thereof unintentionally. Therefore, it is possible to prevent misoperation more reliably by mutually effect created by the mentioned effects of the present invention.

In one embodiment of the present invention, the first operation member may be fitted to the first base portion so as to cover over the leading portion. According to this embodiment, it is possible to protect the leading portion from adhesion of foreign matters. Thereby, it is possible to prevent the misoperation further more reliably.

### EFFECTS OF INVENTION

As mentioned above, in the present invention, the wire is connected with the first operation member via the wire joining member, without not directly connected with the first operation member, and when the first operation member is made to revolve around the first pivot point between the operating position and the waiting position, by making, at the middle of the revolution, the wire joining portion transfer in a direction separating from the first pivot point, the wire joining portion is made to ride over the convex portion. Accordingly, even if the wire is operated so as to be pulled out when the first operation member is situated at either the operating position or the waiting position, the wire joining portion is held inside the concave portion, it is possible to exclude a possibility that the wire joining portion rides over the convex portion to transfer to the concave portion of an opposite side unintentionally.

### BRIEF DESCRIPTION OF THE DRAWINGS

Fig.1 is a perspective diagram showing a baby stroller having a braking device as a linking operation mechanism according to one embodiment of the present invention.
Fig.2A is a perspective diagram showing a right braking portion enlarged.
Fig.2B is a perspective diagram showing from a different view point the right braking portion enlarged.
Fig.3 is a perspective diagram showing a left braking portion enlarged.
Fig.4 is a perspective diagram showing a main portion of the braking device.
Fig. 5 is a partially broken perspective diagram of the right braking portion when an operation pedal is placed at a locking position.
Fig.6 is a partially broken perspective diagram of the right braking portion when the operation pedal is placed at a lock releasing position.
Fig.7 is a perspective diagram showing a wire holder enlarged.
Fig.8 is a partially broken perspective diagram of the left braking portion when a following pedal is placed at a locking position.
Fig.9 is a partially broken perspective diagram of the left braking portion when the following pedal is placed at a lock releasing position.
Fig.10 is a sectional diagram for explaining operations at the moment when the braking device is switched to a lock release state.
Fig.11 is a sectional diagram for explaining operations at the moment when the braking device is switched to a lock state.

### DESCRIPTION OF THE EMBODIMENTS

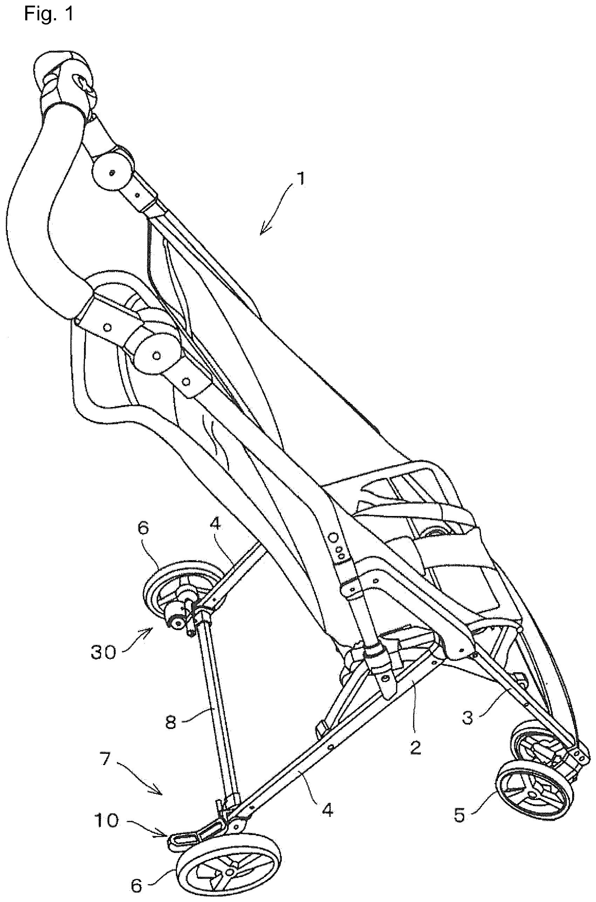

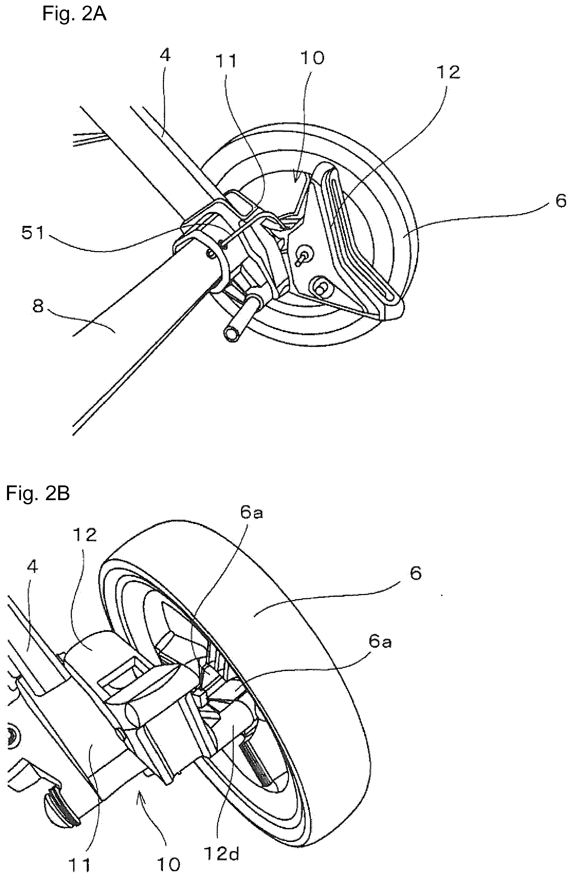

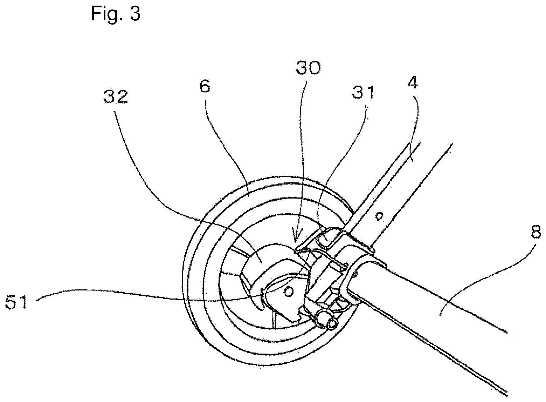

Hereinafter, in reference to the drawings, one embodiment will be explained that a linking operation mechanism according to the present invention is applied to a braking device of a baby stroller which is one example of hand carts. Fig. 1 shows one example of baby strollers. The baby stroller 1 has a main body 2 of a frame structure, and the main body is provided with a pair of front legs 3 and a pair of back legs 4. A front wheel 5 is fitted to the top end portion (bottom end portion) of each front leg 3 and a back wheel 6 is fitted to the top end portion of each back leg 4. To the top end of the back leg 4, provided is a braking device 7 which switches between braking of the pair of back wheels 6 as an operation target and braking release thereof. As shown in Fig.2A and Fig. 3, the braking device 7 has a right braking portion 10 provided at the top end portion of the back leg 4 of the right, and a left braking portion 30 provided at the top end portion of the back leg 4 of the left.

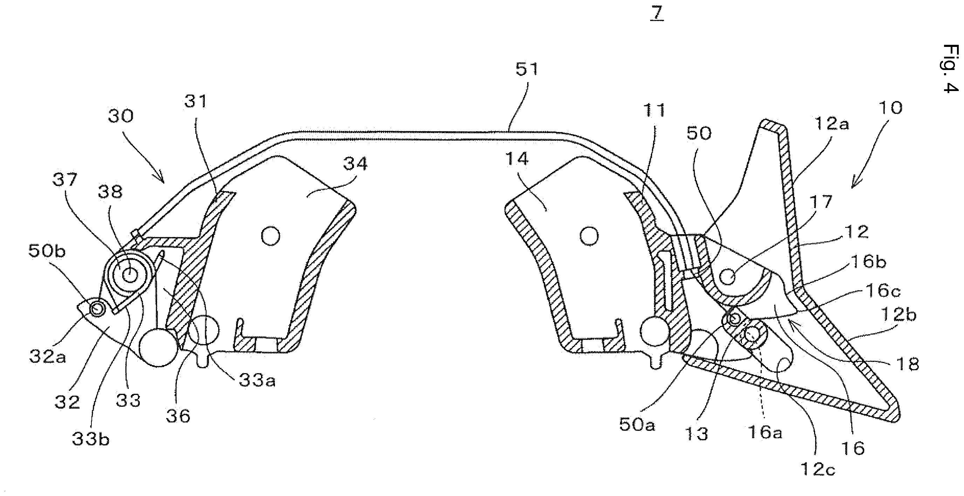

As shown in Fig.4, the right braking portion 10 has a right holder 11 as a first base portion, an operation pedal 12 as a first operation member fitted to the right holder 11, and a wire holder 13 as a wire joining member to be combined with the operation pedal 12. On the other hand, the left braking portion 30 has a left holder 31 as a second base portion, a following lever 32 as a second operation member fitted to the left holder 31, and a coil spring 33 arranged between the left holder 31 and the following lever 32. A wire 50 is disposed over the braking portions 10 and 30. The wire 50 is passed inside a tube 51 provided between the right holder 11 and the left holder 31. One end portion 50a of the wire 50 is fixed to the wire holder 13, and the other end portion 50b is fixed to the following lever 32. Accordingly, when the operation pedal 12 is operated, the operation is transferred to the following lever 32 via the wire 50. Thereby, the following lever 32 operates in liaison with the operation pedal 12. In addition, apparently as shown Figs. 2A and 3, a back portion joining beetle 8 for reinforcing the main body 2 is disposed over the right holder 11 and the left holder 31. The back portion joining beetle 8 is a pipe-shaped member. The tube 51 is housed inside the back portion joining beetle 8, except portions which are pulled out from the holders 11 and 31.

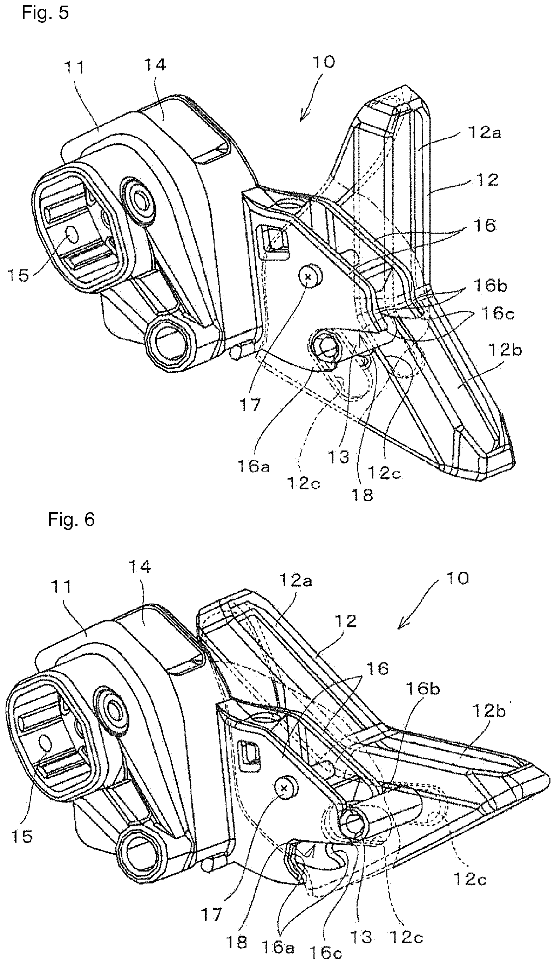

Figs.5 and 6 show details of the right braking portion 10. Fig.5 shows a state that the operation pedal 12 is situated at a locking position (an operating position), and Fig. shows a state that the operation pedal 12 is situated at a lock releasing position (a waiting position). The locking position corresponds to the operating position, and the lock releasing position corresponds to the waiting position. The right holder 11 is provided with a back leg engaging portion 14 opening upward and a joining beetle engaging portion 15 opening sideward. Apparently as shown in Fig.2A, a top end portion of right back leg 4 is inset in the back leg engaging portion 14, and a right end portion of the back portion joining beetle 8 is inset in the joining beetle engaging portion 15. The back leg 4 and the back portion joining beetle 8 are joined integrally with the right holder 11 by using fastening means such as a pin (not illustrated).

Apparently as shown Figs.5 and 6, on a back portion of the right holder 11, a pair of pedal fitting walls 16 is provided so as to protrude in parallel to each other. The operation pedal 12 is a part hollowed so that the operation pedal 12 has on the surface thereof, a pair of operation portions 12a and 12b being gently inclined upward from a bottom which is a center thereof, and that a thickness of a rear side of the operation pedal 12 is almost constant. The operation pedal 12 is combined with the right holder 11 so as to take the pedal fitting walls 16 inside of the operation pedal 12. In other words, the pedal fitting walls 16 are covered by the operation pedal 12. The pin 17 is mounted so as to penetrate the operation pedal 12 from one of the pedal fitting walls 16 to reach the other one of the pedal fitting walls 16. Thereby, the operation pedal 12 is fitted to the right holder 11 so as to be allowed to revolve around the pin 17 as a first pivot point between the locking position (the position shown in Fig.5) and the lock releasing position (the position shown in Fig.6). As shown in Fig. 2B, a hub of the back wheel 6 is provided with a lot of fin-shaped protrusions 6a in a circumferential direction at constant intervals, each protrusion 6a extending toward an outer circumference in a radial direction. The operation pedal 12 is provided with a stopper pin 12d protruding toward the back wheel 6. When the operation pedal 12 is situated at the locking position shown in Fig.5, the stopper pin 12d is engaged to a gap between the protrusions 6a. Thereby, the rotation of the right back wheel 6 is locked. When the operation pedal 12 is revolved toward the lock releasing position shown in Fig. 6, the stopper pin 12d escapes from the gap between the protrusions 6a toward the outer circumference side. Thereby, the lock of the right back wheel 6 is released. Because of this, the right back wheel 6 becomes capable of rotating.

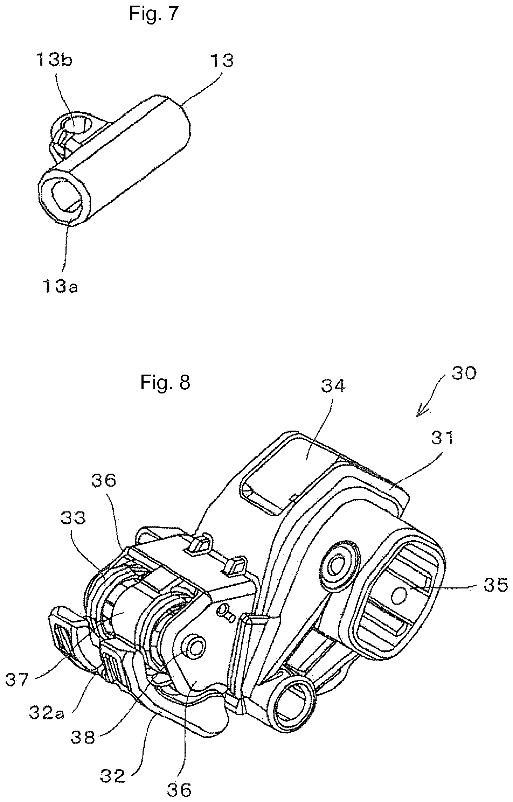

The outer circumference of the pedal fitting walls 16 is provided with a first concave portion 16a and a second concave portion 16b, and a convex portion 16c is formed between the first concave portion 16a and the second concave portion 16b. Thereby, the outer circumference of the pedal fitting walls 16 functions as a leading portion 18 for the wire holder 13. The operation pedal 12 is provided with long hollows 12c, and in the long hollows 12c, the wire holder 13 is mounted. As shown in Fig.7, the wire holder 13 has a leading cylinder 13a having an almost cylindrical form and a wire fixing portion 13b protruding from an outer circumference of the leading cylinder 13a. One end portion 50a of the wire 50 is fixed to the wire fixing portion 13b. As shown in Fig. 5 and Fig. 6, the leading cylinder 13a of the wire holder 13 is engaged to the long hollows 12c at the ends of the leading cylinder 13a respectively. Thereby, the wire holder 13 is allowed to move along the long hollow 12c. In addition, the leading cylinder 13a of the wire holder 13 contacts with the outer circumference of the pedal fitting walls 16 by tensile force affecting the wire 50. In other words, the outer circumference of the pedal fitting walls 16 functions as a cam which transfers the wire holder 13 on a predetermined trace, while receiving tensile force affecting the wire holder 13. When the operation pedal 12 is situated at the locking position (Fig.5) the leading cylinder 13a is engaged to the first concave portion 16a, and when the operation pedal 12 is situated at the lock releasing position (Fig. 6) the leading cylinder 13a is engaged to the second concave portion 16b.

Comparing a distance from the pin 17 to the first concave portion 16a, a distance from the pin 17 to the second concave portion 16b, and a distance from the pin 17 to the convex portion 16c, the distance from the pin 17 to the first concave portion 16a is shorter than the distance from the pin 17 to the second concave portion 16b. The distance from the pin 17 to the convex portion 16c is longer than the distance from the pin 17 to the second concave portion 16b. Accordingly, when the operation pedal 12 revolves between the locking position and the lock releasing position around the pin 17 as a center, the wire holder 13 moves temporally in a direction separating from the pin 17 inside the long hollow 12c in order to ride over the convex portion 16c, and, after passing the convex portion 16c, moves in a direction approaching to the pin 17 inside the long hollow 12c. A contour shape of an outer circumference of a part of the pedal fitting wall 16 from the first concave portion 16a to the convex portion 16c (that is, a part to contact with the wire holder 13) is different from a contour shape of a part of the pedal fitting wall 16 from the second concave 16b to the convex portion 16c. Specifically, comparing changing amounts of distance at the moment when the operation pedal 12 revolves by a unit angle, the contour shape of the pedal fitting wall 16 is determined so that the changing amount at the moment when the wire holder 13 transfers from the first concave portion 16a to the convex portion 16c is bigger than the changing amount at the moment when the wire holder 13 transfers from the second concave portion 16b to the convex portion 16c.

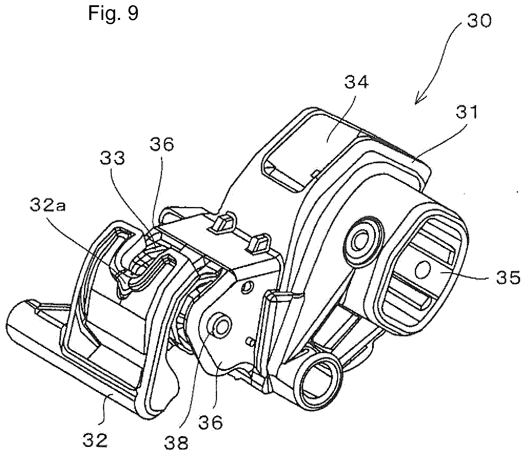

Figs.8 and 9 show the details of the left braking portion 30. Fig.8 shows a state that the following lever 32 is situated at a locking position, and Fig.9 shows a state that the following lever 32 is situated at a lock releasing position. The left holder 31 is provided with a back leg engaging portion 34 opening upward and a joining beetle engaging portion 35 opening sideward. Apparently as shown in Fig. 3, a top end portion of the left back leg 4 is inset into the back leg engaging portion 34, and a left end portion of the back portion joining beetle 8 is inset into the joining beetle engaging portion 35. The back leg 4 and the back portion joining beetle 8 are joined integrally with the left holder 31 by fastening means such as a pin (not illustrated).

At the back portion of the left holder 31, a pair of lever fitting walls 36 is provided so as to protrude in parallel to each other. On the other hand, a spring supporting shaft 37 is formed at the following lever 32 integrally. A coil spring 33 is fitted to an outer circumference of the spring supporting shaft 37. The spring supporting shaft 37, where the coil spring 33 is fitted, is inserted between the lever fitting walls 36. Further, a pin 38 is mounted to the spring supporting shaft 37 so as to penetrate the spring supporting shaft 37 from one of the lever fitting walls 36 to reach the other one of the lever fitting walls 36. Thereby, the following lever 32 is fitted to the left holder 31 so as to be allowed to revolve around the pin 38 as a second pivot point between the locking position (the position shown in Fig.8) and the lock releasing position (the position shown in Fig.9). The relation between the following lever 32 and the left back wheel 6 is similar to the relation between the operation pedal 12 and the right back wheel 6. That is, when the following lever 32 is situated at the locking position, a stopper pin (not illustrated) of the following lever 32 enters a gap between protrusions of the left back wheel 6 to lock the left back wheel 6. When the following lever 32 moves to the lock releasing position, the stopper pin escapes from the gap between the protrusions of the left back wheel 6 to release the lock of the left back wheel 6, and the left back wheel 6 becomes capable of rotating.

When the following lever 32 is fitted to the left holder 31, one of arms 33a of the coil spring 33 is pushed against the left holder 31, and the other one of arms 33b is pushed against the following lever 32. Thereby, the coil spring 33 is interposed between the left holder 31 and the following lever 32 so as to be twisted in an appropriate degree along a clockwise direction of Fig.4. By a restoring force to the twist, the following lever 32 is pushed back revolving around the pin 38 toward the locking position. The following lever 32 is further provided with a wire fixing portion 32a. The other end portion 50b of the wire 50 is fixed to the wire fixing portion 32a. The length of the wire 50 is controlled so that the following lever 32 revolves up to the lock releasing position when the leading cylinder 13a of the wire holder 13 sits on the second concave portion 16b of the right holder 11. By the restoring force of the coil spring 33, first, the following lever 33 is driven in a direction heading to the locking position around the pin 38 as a center. The restoring force is transferred to the operation pedal 12 through the wire 50 and the wire holder 13. Thereby, the operation pedal 12 is also driven in a direction heading to the locking position. The following lever 32 is designed so as to revolve in a clockwise direction of Fig.4 past the lock releasing position, at the moment when the leading cylinder 13a rides over the convex portion 16c of the right holder 11. When the leading cylinder 13a sits on the first concave portion 16a of the right holder 11, the following lever 32 is held at the locking position by the restoring force of the coil spring 33.

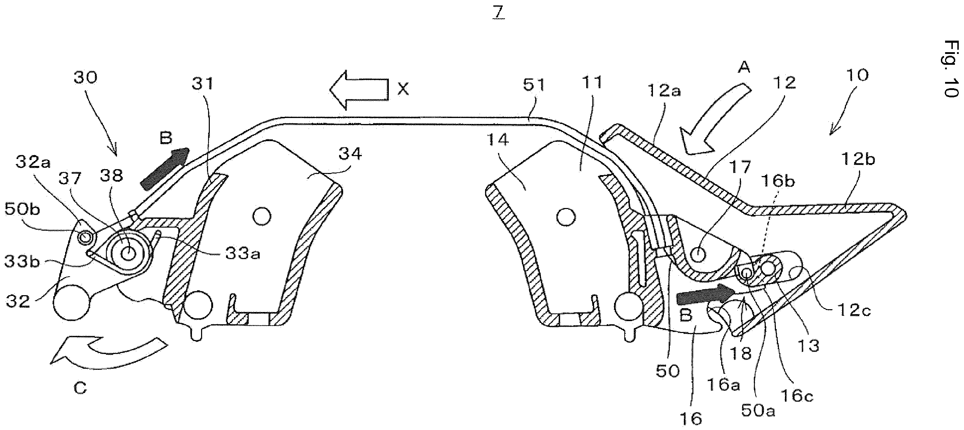

Next, the operation of braking device 7 will be described. As shown in Fig.4, in a state that the rotation of back wheel 6 is locked, the operation pedal 12 exists at a position where the operation pedal 12 has been revolved around the pin 17 as a center in a clockwise direction, and the wire holder 13 exists at a position where the wire holder 13 is engaged to the first concave portion 16a of the pedal fitting walls 16. In this case, the operation pedal 12 is held at the locking position, and the wire 50 is in a state of being played out toward the left braking portion 30. Thereby, the following lever 32 is held at the locking position by revolving around the pin 38 as a center in a counterclockwise direction because of the restoring force of the coil spring 33. As indicated by an arrow A of Fig.10, when there is performed a tread operation to an upper operation portion 12a of the operation pedal 12 (hereinafter referred to as "a lock releasing operation"), the operation pedal 12 revolves around the pin 17 as a center in a counterclockwise direction in the diagram. Thereby, the operation pedal 12 moves to the lock releasing position. According to this, while moving inside the long hollow 12c, the wire holder 13 transfers from the first concave portion 16a of the pedal fitting walls 16 to the second concave portion 16b riding over the convex portion 16c. Thereby, the wire 50 is drawn to the right braking portion 10 side as shown by an arrow B. Therefore, the following lever 32 revolves, as shown by an arrow C of the diagram, around the pin 38 as a center in a clockwise direction against the coil spring 33, and moves to the lock releasing position. Thereby, the lock of rotation of right and left back wheels 6 is integrally released.

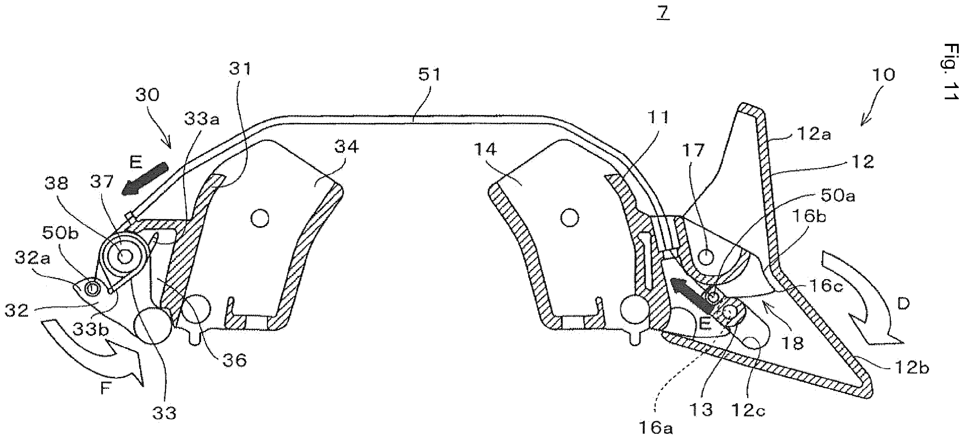

As shown by an arrow D in Fig.11, when there is performed a tread operation to a lower operation portion 12b of the operation pedal 12 (hereinafter referred to as "a locking operation"), the operation pedal 12 revolves around the pin 17 as a center toward the lock releasing position. According to the revolution, the wire holder 13, while moving inside the long hollow 12c, transfers from the second concave portion 16b of the pedal fitting walls 16 to the first concave portion 16a by riding over the convex portion 16c. Thereby, as shown by an arrow E, the wire 50 is played out to the left braking portion 30 side. Therefore, the following lever 32 moves, as shown by an arrow F, to the locking position by revolving around the pin 38 as a center in a counterclockwise direction by the restoring force of the coil spring 33. Thereby, the rotations of right and left back wheels 6 are integrally locked.

In the above mentioned braking device 7, the wire 50 is joined to the operation pedal 12 via the wire holder 13. The wire holder 13 is combined with the operation pedal 12 so as to be able to move along the long hollow 12c. Accordingly, it is possible to change appropriately a distance between the pin 17 which is the center of revolution of the operation pedal 12 and the wire fixing portion 13b where the wire 50 is fitted to the operation pedal 12, while the operation pedal 12 is revolving between the locking position and the lock releasing position. The distance becomes small when the wire holder 13 is situated at the first concave position 16a which is the locking position and the second concave position 16b which is the lock releasing position, and the distance becomes the longest at the moment when the wire holder 13 rides over the convex portion 16c on the way. Accordingly, by the tensile force applied to the wire 50 by the coil spring 33, when the operation pedal 12 is situated at the locking position, the wire holder 13 is pushed against the first concave portion 16a, and when the operation pedal 12 is situated at the lock releasing position, the wire holder 13 is pushed against the second concave portion 16b.

Even when, in a state that the operation pedal 12 is situated at the lock releasing position, a pulling operation is performed to the wire 50 in a direction that the operation pedal 12 is returned to the locking position as shown by an arrow X in Fib.10, the wire holder 13 is held on the second concave portion 16b, and there is no possibility that the wire holder 13 transfers to the first concave portion 16a side riding over the convex portion 16c. Accordingly, there is no possibility that the state of only the right braking portion 10 is switched unexpectedly from the lock releasing position to the locking position by an unintentional revolution of the operation pedal 12. Also, even if the wire 50 is pulled in a similar way when the operation pedal 12 is situated at the locking position, similarly the wire holder 13 is held on the first concave portion 16a, and there is no possibility that the operation pedal 12 revolves unintentionally. Incidentally, in a case that the one end portion 50a of the wire 50 is connected directly with the operation pedal 12 without the wire holder 13, a distance between the connection point and the pin 17 is constant irrespective of the position of the operation pedal 12. In this case, if an operation shown by an arrow X in Fig.10 is performed at the middle of the wire 50, the operation pedal 12 might revolve to the locking position side in conjunction with the operation, and thereby, there is a possibility that the locking state is switched unexpectedly.

According to the above embodiment, the first concave portion 16a of the pedal fitting walls 16 is located more nearly to the pin 17 than the second concave portion 16b. In a case that the operation pedal 12 is made to revolve between the locking position and the lock releasing position, some resistance is generated against the operation to the operation pedal 12 during a period after the wire holder 13 starts transferring from the first concave portion 16a or the second concave portion 16b until the wire holder 13 rides over the convex portion 16c. The resistance varies depending on how long is a distance that the wire holder 13 should transfer from the pin 17. As the distance is longer, the resistance increases. Because of this, operation force to be required to a user also increases. Accordingly, it is possible to make a difference in the operation force to the operation pedal 12 between a case of operating the operation pedal 12 from the locking position to the lock releasing position and a case of operating the operation pedal 12 in a reverse direction. Thereby, it is possible to differentiate the operation force between the locking operation and the lock releasing operation, and give a user a clue to recognizing which operation is being performed.

Additionally, comparing between the case of locking operation and the case of lock releasing operation, a distance that the wire holder 13 transfers in a direction separating from the pin 17 until riding over the convex portion 16c, the distance in the case of lock releasing operation is longer than the distance in the case of locking operation. Accordingly, bigger operation force is required at the moment of performing the lock releasing operation, than the moment of performing the locking operation. Because of this, it is possible to expect the effect of preventing a user from performing the lock releasing operation unintentionally. As the restoring force of the coil spring 33 acts, via the wire 50 and the wire holder 13, in a direction that the operation pedal 12 is pulled in the locking position from the lock releasing position, it is possible to further increase the operation force to be required for the lock releasing operation in comparison with the operation force for the locking operation. Thereby, it is possible to further improve the effect of suppressing unintentional lock releasing operation.

According to the braking device 7 above mentioned, it is possible to hold the operation pedal 12 and the following lever 32 by a single coil spring 33. Accordingly, in comparison with a case that a spring is provided independently to each of the right and left braking portions and each operation member is held at the locking position independently, it is possible to reduce the number of parts. Further, the operation pedal 12 is fitted to the right holder 11 so as to cover over the leading portion 18 of the pedal fitting walls 16 therein. Accordingly, it is possible to protect the leading portion 18 from adhesion of foreign matters such as mud splashed by the back wheels 6.

The present invention is not limited to the above mentioned embodiment, and can be varied appropriately. For example, the linking operation mechanism of the present invention is not only applied to a braking device of back wheels of a baby stroller, but also can be applied to a braking device of wheels provided to a hand barrow other than a baby stroller. The present invention is not only applied to a case that a situation of wheels is switched between braking and brake releasing, but also can be applied appropriately to a case that various situations of an operation object is switched by revolution of the first operation member between the operating position and the waiting position. Further, the present invention is not only applied to a case that the present invention is provided as one portion of a hand barrow, but also can be applied to various kinds of liking operation mechanism that, by transferring an operation of one operation member to the other operation member via a wire, both of the operation members are made to work together.

The mentioned embodiment showed a case that a user himself/herself operates the operation pedal 12 as the first operation member. But, the first operation member is not limited to a member to be operated by the user. For example, the first operation member may be operated by driving force of a motor or the like. Even in a case that the first operation member is made to revolve by an operation by a user, a member which should be operated directly by the user may be an additional operation member different from the first and second operation members. In this case, as a result of operating the additional operation member, the first operation member may be operated, and the operation may be transferred via a wire to operate the second operation member In this case, various kinds of mechanisms such as a speed reducing mechanism, a double force mechanism or the like, may be further interposed between the additional operation member and the first operation member.

With respect to the operating position and the waiting position of each of the first and second operation members, there is not only a case that the operating position and the waiting position are recognized as the locking position and the lock releasing position respectively. The operating position and the waiting position can be appropriately set. It is enough that the operating position is a position where the first operation member and the second operation member act on their operation objects respectively, and the waiting position is a position where by separating the operation member from the operating position, the action by the operation member at the operating position is eliminated. Accordingly, as long as the action obtained when the member is situated at the operating position is eliminated at the moment when the member is situated at the waiting position, it does not matter whether or not an additional operation occurs at the waiting position.

With respect to the first base portion and the second base portion, there is not only a case that each of the first base portion and the second base portion is provided independently at a position separated from each other, like the above embodiment. As long as the first operation member and the second operation member can revolve around the first pivot point and the second pivot point as centers thereof respectively, the first base portion and the second base portion can be a same portion. With respect to the first pivot point and the second pivot point, there is not only a case that the first pivot point and the second pivot point are provided so as to revolve the first operation member and the second operation member respectively around axis lines parallel to each other. That is, the first operation member and the second operation member may be members which revolve around axis lines non-parallel to each other as centers respectively.

## Claims

1. A linking operation mechanism (7) comprising:
a first operation member (12) provided to a first base portion (11) so as to revolve around a first pivot point (17) as a center between an operating position and a waiting position;
a second operation member (32) provided to a second base portion (31) so as to revolve around a second pivot point (38) as a center between an operating position and a waiting position;
a wire (50) arranged between the first operation member (12) and the second operation member (32) so that the first operation member (12) and the second operation member (32) work together between the operating position and the waiting position; and
a spring member (33) giving tensile force to the wire (50) so that both of the first operation member (12) and the second operation member (32) are driven toward either the operating position or the waiting position,
**characterized in that** the linking operation mechanism (7) further comprises a wire joining member (13) interposed between the first operation member and one end portion of the wire (50), fitted to the first operation member (12) so as to transfer in a direction approaching to and separating from the first pivot point (17), and joined to the one end portion (50a) of the wire (50) so as to transfer integrally relative to the first operation member (12), and
the first base portion (11) is provided with a leading portion (18) having:
concave portions (16a, 16b) contacting with the wire joining member (13) by accepting the tensile force of the wire (50) affecting the wire joining member (13), to which when the first operation member (12) is situated at the operating position and the waiting position the wire joining member (13) is engaged; and
a convex portion (16c) located between the concave portions (16a, 16b) so as to be ridden over the convex portion (16c) more far away from the first pivot point (17) than a position where the wire joining portion (13) is engaged to the concave portions (16a, 16b).

2. The linking operation mechanism (7) according to claim 1, wherein
the first operation member (12) is provided so as to revolve between the operating position and the waiting position by operation of a user, and
a distance from the first pivot point (17) to one of the concave portions (16a) and a distance from the first pivot point (17) to the other one of the concave portions (16b) are different from each other.

3. The linking operation mechanism (7) according to claim 2, wherein
the first operation member (12) and the second operation member (32) are provided so as to put a brake on a pair of operation objects (6) when being situated at the operating position respectively, and release the brake of the pair of operation objects (6) when being situated at the waiting position,
when the first operation member (12) is situated at the operating position the wire joining member (13) is engaged to the one of the concave portions (16a), and when the first operation member (12) is situated at the waiting position the wire joining member (13) is engaged to the other one of the concave portions (16b), and
the distance from the first pivot point (17) to the one of the concave portions (16a) is set so as to be longer than the distance from the first pivot point (17) to the other one of the concave portions (16b).

4. The linking operation mechanism (7) according to claim 3, wherein
the spring member (33) is provided to drive the second operation member (32) toward the operating position.

5. The linking operation mechanism (7) according to claim 3 or 4, wherein
the one pair of operation objects (6) is one pair of right-left wheels of a hand barrow (1).

6. The linking operation mechanism (7) according to claim 5, wherein
as the first operation member (12), provided is an operation pedal which allows a user a tread operation between the operating position and the waiting position.

7. The linking operation mechanism (7) according to claim 5 or 6, wherein:
the first base portion (11) and the second base portion (31) are provided at top end portions of the pair of right-left leg portions (4) of the hand barrow (1) respectively;
a joining beetle (8) is arranged between the top end portions of the leg portions (4);
the wire (50) is housed in a tube (51); and
the tube (51) is passed inside the joining beetle (8).

8. The linking operation mechanism (7) according to any one of claims 1 to 7, wherein
the first operation member (12) is fitted to the first base portion (11) so as to cover over the leading portion (18).

## Patentansprüche

1. Verbindungsbetätigungsmechanismus (7), aufweisend:
ein erstes Betätigungselement (12), welches an einem ersten Basisabschnitt (11) derart bereitgestellt ist, dass es sich um einen ersten Schwenkpunkt (17) als Mittelpunkt zwischen einer Betriebsposition und einer Warteposition dreht,
ein zweites Betätigungselement (32), welches an einem zweiten Basisabschnitt (31) derart bereitgestellt ist, dass es sich um einen zweiten Schwenkpunkt (38) als Mittelpunkt zwischen einer Betriebsposition und einer Warteposition dreht,
einen Draht (50), welcher zwischen dem ersten Betätigungselement (12) und dem zweiten Betätigungselement (32) derart angeordnet ist, dass das erste Betätigungselement (12) und das zweite Betätigungselement (32) zwischen der Betriebsposition und der Warteposition zusammenarbeiten, und
ein Federelement (33), welches eine Zugkraft auf den Draht (50) derart ausübt, dass sowohl das erste Betätigungselement (12) als auch das zweite Betätigungselement (32) in Richtung zu entweder der Betriebsposition oder der Warteposition getrieben werden,
**dadurch gekennzeichnet, dass** der Verbindungsbetätigungsmechanismus (7) ferner ein Drahtverbindungselement (13) aufweist, welches zwischen dem ersten Betätigungselement und einem Endabschnitt des Drahts (50) angeordnet ist, an das erste Betätigungselement (12) angepasst ist, um in einer Richtung verlagert zu werden, in welcher es sich dem ersten Schwenkpunkt (17) nähert und von diesem getrennt ist, und mit dem einen Endabschnitt (50a) des Drahts (50) derart verbunden ist, dass es integral relativ zu dem ersten Betätigungselement (12) verlagert wird, und
der erste Basisabschnitt (11) mit einem vorauseilenden Abschnitt (18) bereitgestellt ist, welcher aufweist:
konkave Abschnitte (16a, 16b), welche mit dem Drahtverbindungselement (13) in Kontakt stehen, indem sie die das Drahtverbindungselement (13) betreffende Zugkraft des Drahts (50) aufnehmen, und mit welchen das Drahtverbindungselement (13) in Eingriff steht, wenn das erste Betätigungselement (12) in der Betriebsposition und der Warteposition positioniert ist, und
einen konvexen Abschnitt (16c), welcher zwischen den konkaven Abschnitten (16a, 16b) angeordnet ist, so dass über den konvexen Abschnitt (16c) weiter weg von dem ersten Schwenkpunkt (17) gefahren wird, als an einer Position, an welcher der Drahtverbindungsabschnitt (13) mit den konkaven Abschnitten (16a, 16b) in Eingriff steht.

2. Verbindungsbetätigungsmechanismus (7) nach Anspruch 1, wobei das erste Betätigungselement (12) derart bereitgestellt ist, dass es sich zwischen der Betriebsposition und der Warteposition durch eine Betätigung eines Benutzers dreht, und
ein Abstand von dem ersten Schwenkpunkt (17) zu einem der konkaven Abschnitte (16a) und ein Abstand von dem ersten Schwenkpunkt (17) zu dem anderen der konkaven Abschnitte (16b) verschieden voneinander sind.

3. Verbindungsbetätigungsmechanismus (7) nach Anspruch 2, wobei das erste Betätigungselement (12) und das zweite Betätigungselement (32) derart bereitgestellt sind, dass sie eine Bremse auf ein Paar von Betätigungsobjekten (6) setzen, wenn sie jeweils in der Betriebsposition angeordnet sind, und die Bremse von dem Paar von Betätigungsobjekten (6) lösen, wenn sie in der Warteposition angeordnet sind,
wenn das erste Betätigungselement (12) in der Betriebsposition positioniert ist, das Drahtverbindungselement (13) mit einem der konkaven Abschnitte (16a) in Eingriff steht, und wenn das erste Betätigungselement (12) in der Warteposition positioniert ist, dass Drahtverbindungselement (13) mit dem anderen der konkaven Abschnitte (16b) in Eingriff steht, und
der Abstand von dem ersten Schwenkpunkt (17) zu dem einen der konkaven Abschnitte (16a) derart eingestellt ist, dass er länger als der Abstand von dem ersten Schwenkpunkt (17) zu dem anderen der konkaven Abschnitte (16b) ist.

4. Verbindungsbetätigungsmechanismus (7) nach Anspruch 3, wobei das Federelement (33) derart bereitgestellt ist, dass es das zweite Betätigungselement (32) in Richtung der Betriebsposition treibt.

5. Verbindungsbetätigungsmechanismus (7) nach Anspruch 3 oder 4, wobei das eine Paar von Betätigungsobjekten (6) ein Paar eines rechten und eines linken Rads eines Handkarrens (1) ist.

6. Verbindungsbetätigungsmechanismus (7) nach Anspruch 5, wobei als das erste Betätigungselement (12) ein Betätigungspedal bereitgestellt ist, welches einem Benutzer eine Trittbetätigung zwischen der Betriebsposition und der Warteposition gestattet.

7. Verbindungsbetätigungsmechanismus (7) nach Anspruch 5 oder 6, wobei:
der erste Basisabschnitt (11) und der zweite Basisabschnitt (31) an oberen Endabschnitten des Paars eines rechten bzw. eines linken Beinabschnitts (4) des Handkarrens (1) bereitgestellt sind,
eine Verbindungsrampe (8) zwischen den oberen Endabschnitten der Beinabschnitte (4) angeordnet ist,
der Draht (50) in einem Rohr (51) aufgenommen ist und
das Rohr (51) innerhalb der Verbindungsrampe (8) hindurchgeführt ist.

8. Verbindungsbetätigungsmechanismus (7) nach einem der Ansprüche 1 bis 7, wobei das erste Betätigungselement (12) an den ersten Basisabschnitt (11) derart angepasst ist, dass es den vorauseilenden Abschnitt (18) abdeckt.

## Revendications

1. Mécanisme d'opération de liaison (7) comprenant :
un premier élément (12) prévu sur une première partie de base (11) de façon à tourner autour d'un premier point de pivotement (17) en guise de centre entre une position de fonctionnement et une position d'attente ;
un second élément (32) prévu sur une seconde partie de base (31) de façon à tourner autour d'un second point de pivotement (38) en guise de centre entre une position de fonctionnement et une position d'attente ;
un câble (50) prévu entre le premier élément (12) et le second élément (32) de sorte que le premier élément (12) et le second élément (32) fonctionnent ensemble entre la position de fonctionnement et la position d'attente ; et
un ressort (33) fournissant une force de traction au câble (50) de sorte que le premier élément (12) et le second élément (32) soient entraînés vers la position de fonctionnement ou la position d'attente,
**caractérisé en ce que** le mécanisme d'opération de liaison (7) comprend en outre un élément de jonction de câble (13) interposé entre le premier élément et une partie d'extrémité du câble (50), fixé sur le premier élément (12) de façon à effectuer un transfert dans une direction qui s'approche de et qui s'éloigne du premier point de pivotement (17), et joint à la partie d'extrémité (50a) du câble (50) de façon à effectuer un transfert de manière intégrale par rapport au premier élément (12), et
la première partie de base (11) est munie d'une partie d'attaque (18) ayant :
des parties concaves (16a, 16b) en contact avec l'élément de jonction de câble (13) en acceptant la force de traction du câble (50) qui affecte l'élément de jonction de câble (13), avec lesquelles l'élément de jonction de câble (13) est engagé lorsque le premier élément (12) se trouve dans la position de fonctionnement et la position d'attente ; et
une partie convexe (16c) située entre les parties concaves (16a, 16b) de façon à être placée par-dessus la partie convexe (16c) plus loin du premier point de pivotement (17) qu'un emplacement auquel l'élément de jonction de câble (13) est engagé avec les parties concaves (16a, 16b).

2. Mécanisme d'opération de liaison (7) selon la revendication 1, dans lequel
le premier élément (12) est prévu de façon à tourner entre la position de fonctionnement et la position d'attente par l'opération d'un utilisateur, et
une distance entre le premier point de pivotement (17) et l'une des parties concaves (16a) et une distance entre le premier point de pivotement (17) et l'autre des parties concaves (16b) sont différentes l'une de l'autre.

3. Mécanisme d'opération de liaison (7) selon la revendication 2, dans lequel le premier élément (12) et le second élément (32) sont prévus de façon à placer un frein sur une paire d'objets (6) lorsqu'ils se trouvent dans la position de fonctionnement, respectivement, et pour relâcher le frein de la paire d'objets (6) lorsqu'ils se trouvent dans la position d'attente,
lorsque le premier élément (12) se trouve dans la position de fonctionnement, l'élément de jonction de câble (13) est engagé avec l'une des parties concaves (16a), et, lorsque le premier élément (12) se trouve dans la position d'attente, l'élément de jonction de câble (13) est engagé avec l'autre des parties concaves (16b), et
la distance entre le premier point de pivotement (17) et l'autre des parties concaves (16a) est définie de façon à être plus longue que la distance entre le premier point de pivotement (17) et l'autre des parties concaves (16b).

4. Mécanisme d'opération de liaison (7) selon la revendication 3, dans lequel le ressort (33) est prévu pour entraîner le second élément (32) vers la position de fonctionnement.

5. Mécanisme d'opération de liaison (7) selon la revendication 3 ou 4, dans lequel
la paire d'objets (6) est une paire de roues droites/gauches d'une brouette (1).

6. Mécanisme d'opération de liaison (7) selon la revendication 5, dans lequel en guise de premier élément (12) est prévue une pédale qui permet à un utilisateur de passer de la position de fonctionnement à la position d'attente.

7. Mécanisme d'opération de liaison (7) selon la revendication 5 ou 6, dans lequel :
la première partie de base (11) et la seconde partie de base (31) sont prévues au niveau des parties d'extrémité supérieures de la paire de parties de support droites/gauches (4) de la brouette (1), respectivement ;
une tige de jonction (8) est prévue entre les parties d'extrémité supérieures des parties de support (4) ;
le câble (50) est contenu dans un tube (51) ; et
le tube (51) passe à l'intérieur de la tige de jonction (8).

8. Mécanisme d'opération de liaison (7) selon l'une quelconque des revendications 1 à 7, dans lequel
le premier élément (12) est fixé sur la première partie de base (11) de façon à recouvrir la partie d'attaque (18).
